# EUROPÄISCHE PATENTANMELDUNG

(11) **EP 4 074 676 A1**
(43) Veröffentlichungstag der Anmeldung: **19.10.2022**
(21) Anmeldenummer: 22168592.8
(22) Anmeldetag: 14.04.2022
(51) Int. Cl.: C04B 35/565, C04B 35/573, C04B 35/63, C04B 35/65, F41H 5/04, B32B 18/00, B33Y 10/00, B33Y 70/00, C04B 35/626

(54) **VERBUNDFORMKÖRPER AUS EINER REAKTIONSGEBUNDENEN, MIT SILIZIUM INFILTRIERTEN MISCHKERAMIK**

(30) Priorität: 16.04.2021 WO PCT/EP2021/059908
(71) Anmelder: Schunk Ingenieurkeramik GmbH, 47877 Willich-Münchheide (DE)
(72) Erfinder: SCHNETTER, Lars, 53518 Wimbach (DE); GINGTER, Philipp, 41066 Mönchengladbach (DE); MINAS-PAYAMYAR, Clara, 40235 Düsseldorf (DE); HEINZ, Fabian, 56242 Selters (DE)
(74) Vertreter: Sparing Röhl Henseler

(57) **Zusammenfassung**

Verbundformkörper aus einer reaktionsgebundenen, mit Silizium infiltrierten Mischkeramik, deren Gefüge bestimmt ist durch Primärkörner aus kristallinen B₄C-Körnern (1) der mittleren Korngröße d50 > 100µm und < 500µm sowie einem Anteil von > 10 Gew.-% und < 50 Gew.-%, und durch Primärkörner eines feineren Siliziumcarbid mit d50 < 70µm sowie einem Anteil von > 10 Gew.-% und < 50 Gew.-%, und die Primärkörner siliziert (3) verbunden sind durch sekundär gebildetes Siliziumcarbid mit einem Anteil von > 5 Gew.-% und < 25 Gew.-%, in einer Siliziumcarbidmatrix mit einem Gehalt an freiem metallischem Silizium (2) von > 1 Gew.-% und < 20 Gew.-%, und die Formgebung mit einem Hüllvolumen > 200 x 200 x 200mm erfolgt.

## Beschreibung

Die Erfindung betrifft einen Verbundformkörper aus einer reaktionsgebundenen, mit Silizium infiltrierten Mischkeramik.

Im Bereich der Schutzmaterialien für Personen, Fahrzeuge und Luftfahrzeuge spielt Gewicht eine entscheidende Rolle. Aus diesem Grund werden alternativ zu Stahllösungen insbesondere Keramik-Kompositlösungen eingesetzt. Diese Lösungen ermöglichen es, im Vergleich zu Stahl bei geringerem Gesamtgewicht und damit besserem Tragekomfort für den Anwender ballistische Projektile zu stoppen.

Prinzipiell im Vordergrund stehen dabei Aluminiumoxid, Siliciumcarbid, Borcarbid in gesinterter Form sowie reaktionsgebundene Materialien mit einem metallischen Anteil in der Matrix. Beispiele sind hier reaktionsgebundenes SiC (RBSiC), reaktionsgebundenes B₄C (RB B₄C) sowie Kombinationen dieser Materialien (RBSiC/ B₄C). Während Siliziumcarbid sowie insbesondere Borcarbid die leichtesten Schutzlösungen ermöglichen, so erzeugen Sie auch die höchsten Kosten. Aus diesem Grund werden diese Materialien vorzugsweise im Bereich des Luftfahrzeugschutzes sowie Personenschutzes eingesetzt. Im Bereich des Personenschutzes/Körperschutzes kommen insbesondere auch Monolithe (einteilige Schutzelemente) zum Einsatz.

Für diese Produkte bieten gesinterte Materialien typischerweise eine Möglichkeit für leichtere Schutzelemente als die der reaktionsgebundenen Materialien, dafür bieten die reaktionsgebundenen Materialien in den meisten Fällen das bessere Preis-Leistungsverhältnis. So kann RB B₄C auch mit anteiligem RBSiC erfolgreich für verschiedene Bedrohungsklassen wie NIJ4 und Munitionstypen mit gehärteten Stahlkernen eingesetzt werden. Diese Materialien dominieren in Europa aber auch in asiatischen Ländern wie Korea den Markt.

Aus US 8,128,861 B1 ist bekannt, dass insbesondere für "NEXT Generation SAPI Plates" ein besserer Schutz gegen Munition aus Hartmetall wie WC/Co (Wolframcarbid-Cobald) notwendig ist. Da der US-Defensemarkt der weltweit größte Markt ist, besteht hier ein großes Interesse für effiziente Schutzmaterialien. Im Test gegen Munition mit Wolframcarbidkernen zeigen RB B₄C sowie RBSiC aber auch gesintertes B₄C bisher typischerweise eine schlechte Performance, weshalb hier zumeist gesintertes Siliciumcarbid zum Einsatz kommt und bisher nahezu keine reaktionsgebundenen Materialien.

Selbst gesintertes B₄C performt gegen diese Munitionstypen schlecht, da es auf Grund der hohen Härte des Penetratormaterials und der hohen Geschwindigkeiten zu einer Amorphisierung des Borcarbid kommt, wie beispielsweise beschrieben in "High-Velocity Ballistic Impact with Boron Carbide Produces Localized Amorphization May 2011", MRS Bulletin 28(05).333. Daraus folgt ein Performanceabfall als ballistisches Material.

Für den US-Markt typische Materialien aus RB B₄C, die häufig gegen Bedrohungen ohne WC-Kern verwendet werden, sind beispielsweise in WO 2005/079207 A2 beschrieben. Das typische auf dem US-Markt vorhandene, reaktionsgebundene Material eignet sich somit nicht gegen sogenannte Wuchtgeschosse aus WC.

Darüber hinaus haben die meisten der verwendeten Schutzmaterialien feine Korngrößen, wie z.B. in U.S. 6,609,452 beschrieben. Gemäß dem Stand der Technik bieten solche Materialien eine bessere Performance. Auch in JP 5914026 B2 wird ein reaktionsgebundenes Borcarbidmaterial beschrieben, jedoch mit einer Korngröße < 40µm für das Borcarbidpulver.

Aus US 2013/0168905 A1 ist ferner bekannt, dass grobe Primärkristalle zu einer schlechteren ballistischen Leistung führen, da die groben Kristallite eine schlechtere interkristallinen Bindung bedingen.

Weiterhin ist aus US 3,857,744 ein siliziuminfiltriertes Borcarbid bekannt, das eine Korngröße von "600 grit to 120 grit" einsetzt. Typischerweise wird also eine Korngröße < 110µm eingesetzt. Zudem ist hier der B₄C -Anteil deutlich größer 50 Gew.-%. Es hat sich allerdings gezeigt, dass hohe B₄C -Anteile zu einer schlechteren Performance gegenüber der WC/Co-Munition führen, da eine Amorphisierung des Borcarbids stattfindet.

Aus US-Patent US 2013/0168905 A1 ist schließlich bekannt, dass Partikelgrößen zwischen 200 µm und 40 µm prinzipiell eingesetzt werden können, aber insbesondere Partikel > 90µm abgesiebt werden. Zudem wird dort ein Material mit 50-60 Gew.-% Borcarbid beschrieben, welches sich in der Vergangenheit als nachteilig gegenüber Wolframcarbid gezeigt hat.

Aufgabe der Erfindung ist es daher, einen verbesserten Verbundformkörper zu schaffen, der aus einem reaktionsgebundenen SiC/B₄C -Material besteht, welches ein optimiertes Preis-Leistungsverhältnis aufweist und dabei auch gegen die wichtige Wolframcarbid-Munition verwendet werden kann.

Diese Aufgabe wird durch die Merkmale des Anspruchs 1 gelöst.

Hierdurch wird ein keramischer Körper geschaffen, insbesondere zur Verwendung als ballistischer Schutz, basierend auf einem Metall-Keramikverbundwerkstoff, der Si, SiC und grobkörniges B₄C enthält. Die Werkstoffeigenschaften werden bestimmt durch die Rohstoffrezeptur, das Formgebungsverfahren und den Silizierungsprozess. Die so hergestellten Verbundformkörper haben typischerweise eine optimierte Dichte, hohe Härte und eignen sich durch das spezielle Mikrogefüge insbesondere für ballistische Schutzanwendungen.

Das Mikrogefüge lässt sich bei einer reaktionsgebundenen, mit Silizium infiltrierten Mischkeramik durch die Bildung von sekundärem Siliziumcarbid beeinflussen. Art und Menge eines Kohlenstoffzusatzes sind entscheidend für die Bildung von sekundärem Siliziumcarbid und damit für die Ausbildung der die Werkstofffestigkeit bestimmenden Bindebrücken. Der Silizierungsprozess, bei dem schmelzflüssiges Silizium in den porösen Formkörper eindringt, wird wesentlich beeinflusst durch das Porengerüst.

Überraschenderweise konnte in ballistischen Tests mit dem erfindungsgemäßen Verbundformkörper herausgefunden werden, dass reaktionsgebundenes (RB) B₄C mit Primärkristallen von B₄C > 100µm und B₄C-Anteilen < 50 Gew.-%, eingebettet in eine Matrix aus feinkörnigem SiC, welches sich aus Primär- und Sekundär-SiC-Anteilen zusammensetzt, eine vergleichsweise gute Performance zeigt. Die großen B₄C-Körner in Kombination mit einem nicht zu hohen Mengenanteil beugen überraschenderweise einer Amorphisierung vor, wobei die SiC-Matrix stabilisiert. Auch die gewählte Größe der Primärkörner von B₄C wirkt mit der SiC-Matrix stabilisierend. Dies sind Werkstoffeigenschaften, für die es im Stand der Technik keinen Hinweis gegeben hat.

Schließlich kann über eine Steuerung der Menge des Kohlenstoffzusatzes auf die Bildung von sekundärem Siliziumcarbid und die damit erzeugten Bindebrücken Einfluss genommen werden. Erfindungsgemäß hat sich gezeigt, dass vorzugsweise ein geringere Menge an während der Infiltration gebildeten SiC, beispielsweise von > 5 Gew.-% und < 25 Gew.-% und einem Si-Gehalt < 20 Gew.-%, vorteilhaft ist. Der Werkstoff scheint dadurch eine Art funktionelle Verformbarkeit auf der Ebene der B₄C auszubilden, bei einer an sich kaum verformbaren Keramik.

Ein geringer Si-Anteil sowie ein höherer SiC-Anteil können vorteilhaft sein. Besonders vorteilhaft ist ein verbleibender Si-Gehalt < 15 Gew.-%. Besonders bevorzugt ist ein Material mit einem B₄C-Gehalt zwischen 30-40 Gew.-%, einem Anteil an sekundärem SiC von 15-25 Gew.-% und einem Si-Gehalt < 15 Gew.-% und einer Primärpartikelgröße des B₄C > 100µm.

Für die Formgebung können alle üblichen Verfahren eingesetzt werden. Für einfache Geometrien in limitierter Größe, wie beispielsweise Körperschutzplatten, bietet sich das Schlickergießen sowie insbesondere der Druckschlickerguss als effizienteste Fertigungsmethode an. Hierbei ist zu beachten, dass die groben Kristallite von B₄C zur Absetzung neigen. Ungeachtet dessen ist jedoch ein sedimentationsstabiler Schlicker herstellbar.

Insbesondere bei hohen Wandstärken > 10mm sowie sehr großen Abmessungen kommt das Schlickergießen hier an seine Grenzen, da vermehrt Risse und großflächige Deformation auftreten können. Dies gilt auch für isostatisch gepresstes Material, da die Dichtegradienten beim isostatischen Pressen ebenfalls mit Größe und Volumen zunehmen.

Als geeignete Fertigungsmethode für sehr große Bauteile hat sich überaschenderweise das pulverbettbasierte 3D-Drucken als eine Lösung herausgestellt. Insbesondere für das erfindungsgemäße Material - grobes B₄C, kombiniert mit feinem SiC - ist das Pulverbettdrucken eine sehr effiziente Fertigungsmethode. Die großen Abmessungen werden insbesondere im Luftfahrtbereich benötigt, bspw. als Schutzkomponenten für Sitze oder auch große Paneele.

Die groben Kristallite von B₄C bieten offensichtlich einerseits den Vorteil der hohen Effizienz im Druck, zudem hat sich überraschenderweise herausgestellt, dass die so hergestellten großen Komponenten deutlich homogener sind als Produkte, die über Gießen, Druckgießen oder isostatisches Pressen hergestellt werden. Gegenüber dem isostatischen Pressen und anschließendem Grünbearbeiten bietet der Pulverbettdruck zudem erhebliche Kostenvorteile, da keine maschinelle Bearbeitung (Fräsen des Grünkörpers) notwendig ist und deutlich weniger Material verwendet werden muss.

So ist es mit dem 3D-Pulverbettdruck möglich, große Komponenten wie Sitzschalen und -lehnen aus dem erfindungsgemäßen Verbundformkörper herzustellen. Diese bieten durch den Near-Netshape-Ansatz neben der reinen Einsparung durch das Material zusätzliche Möglichkeiten zur Gewichtseinsparung, da nur dort Material eingesetzt werden muss, wo es gemäß der Anwendung auch benötigt wird.

So hergestellte Schutzpaneele können problemlos Abmessungen von 1m² und mehr annehmen, sodass gesamte Schutzelemente wie Türen, Heckklappen, Bodenelemente und weitere Strukturbauteile eines Fahrzeugs oder Luftfahrzeugs aus einer einzigen Struktur hergestellt werden können. Die großen Elemente erleichtern die Integration und vermeiden Fugen, die ansonsten Schwachstellen im Beschuss darstellen können. So ist bekannt, dass in Tripelpunkten (der Punkt, an dem 3 Ecken einer ballistischen Kachel aufeinandertreffen) die ballistische Leistung um bis zu 30% abnimmt. Auf Grund der hohen Homogenität des aus dem 3D-Druck resultierenden Werkstoffes sind jedoch sehr große Bauteile mit einem Hüllvolumen > 200 × 200 × 200mm³ oder auch großen Flächen > 500 × 500mm² problemlos zu realisieren.

Weitere Ausgestaltungen der Erfindung sind der Erfindung sind der nachfolgenden Beschreibung und den Unteransprüchen zu entnehmen.

Die Erfindung wird nachstehend anhand von Ausführungsbeispielen näher erläutert.

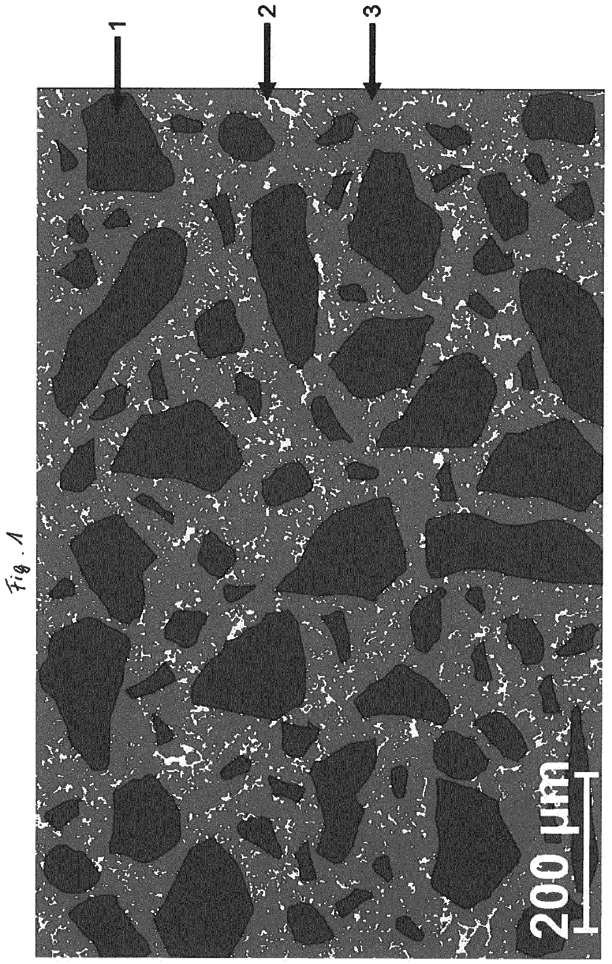

Fig. 1 zeigt schematisch einen Ausschnitt eines Gefügebildes.

Die Erfindung betrifft einen Verbundformkörper aus einer reaktionsgebundenen, mit Silizium infiltrierten Mischkeramik, deren Gefüge bestimmt ist durch Primärkörner aus kristallinem B₄C-Körnern der mittleren Korngröße d50 > 100µm und < 500µm sowie einem Anteil von > 10 Gew.-% und < 50 Gew.-%. Das Gefüge ist ferner bestimmt durch Primärkörner aus Siliziumcarbid mit d50 < 100µm sowie einem Anteil von > 10 Gew.-% und < 50 Gew.-%. Die Primärkörner sind siliziert verbunden durch sekundär gebildetes Siliziumcarbid mit einem Anteil von > 5 Gew.-% und < 25 Gew.-%, in einer Siliziumcarbidmatrix mit einem Gehalt an freiem metallischen Silizium von > 1 Gew.-% und < 20 Gew.-%. Die Formgebung erfolgt mit einem Hüllvolumen > 200 × 200 × 200mm. Fig. 1 zeigt beispielhaft ein erfindungsgemäßes Gefügebild. Bei den Gew.-%-Angaben handelt es sich um Gewichtsprozente.

Die Erfindung betrifft somit ein reaktionsgebundenes SiC/B₄C mit einem B₄C-Gehalt < 50 Gew.-% sowie einer mittleren Partikelgröße (d50) des Borcarbids > 100µm, mit einem Sekundär-SiC-Gehalt < 25 Gew.-%, und einem metallischen Si-Gehalt < 20 Gew.-%.

Bevorzugt liegt der Anteil an Sekundär-SiC zwischen 15 Gew.-% und 25 Gew.-%. Eine stabile Stützmatrix für die Primärkristalle B₄C und SiC kann so geschaffen werden und damit der Widerstand gegenüber beispielsweise Projektilen verstärkt werden.

Besonders bevorzugt ist ein Verbundformkörper mit einem B₄C-Gehalt zwischen 30 Gew.-% und 40 Gew.-% und einem Si-Gehalt < 15 Gew.-% und einer Primärpartikelgröße des B₄C > 200µm.

Besonders bevorzugt ist ferner, dass die Primärkörner aus Siliziumcarbid mit d50 < 40µm, insbesondere < 10µm enthalten sind. Der Dichtegradient kann < 2% betragen. Der Verbundformkörper kann zudem innerhalb des metallischen Siliziums gelöstes Bor mit einem Anteil zwischen > 0,05 und < 5 Gew.-% enthalten.

Das Gefügebild der Fig. 1 zeigt die B₄C-Gehalt Primärkörner 1, freies, metallisches Silizium 2 sowie einen Durchdringungsverbund aus feinkörnigem, primärem und sekundärem Siliciumcarbid 3.

Die Herstellung des Verbundformkörpers kann erfolgen über das Druckschlickergießen, welches das Herstellen eines Schlickers mit SiC/B₄C-Partikeln sowie kolloidalem Kohlenstoff und organischen Hilfsstoffen beinhaltet. Der entstandene Grünkörper wird dann mit flüssigem Silizium kontaktiert und bei Temperaturen zwischen 1500°C-1700°C infiltriert. Dabei reagiert das Silizium mit dem Kohlenstoff zu sekundärem SiC.

In einer weiteren Ausführung der Erfindung findet die Formgebung durch 3D-Druck statt, da dies die Realisierung komplexer Produkte, wie Sitzschalen und -lehnen, für Luftfahrtanwendungen ermöglicht. Die so hergestellten Keramiken bieten im Verbund mit Polymeren (PE, Aramid, etc.) sowie Carbonfasern, Glasfasern und oder Metallen einen besonders effizienten Schutz gegen WC/Co-Munition, insbesondere gegen die Munitionstypen M993 und M995.

Gegenstand der Erfindung ist ferner die Verwendung des Verbundformkörpers als ballistischer Schutz. Hierfür ist der Verbundformkörper vorzugsweise mit einer oder mehreren Lagen eines Backingmaterials überzogen. Beispielsweise kann mindestens eine Lage eines Backingmaterials mit der erfindungsgemäßen Mischkeramik verpresst sein. Das Backingmaterial kann ferner vorzugsweise gebildet sein aus mehreren Lagen eines oder mehrerer Kunststoffe, beispielsweise Polyethylen, Aramid, etc., Carbonfasern, Glasfasern, Metall, beispielsweise Aluminium, Stahl, etc., Kombination dieser Materialien und/oder Verbindungsmaterial, beispielsweise Klebefolien.

Nachfolgend werden verschiedene Anwendungsbeispiele beschrieben:
1. Herstellung einer Körperschutzplatte aus dem erfindungsgemäßen Verbundformkörper, wozu ein Druckschlickerguss zum Einsatz kommt. Zunächst wird eine wässrige Suspension bestehend aus kolloidalem Kohlenstoff mit einer mittleren Partikelgröße von unter 1µm bei einem Anteil von 10 Gew.-%, feinkörnigem Siliciumcarbid mit einer mittleren Partikelgröße von 5-10µm bei einem Anteil von 50 Gew.-% sowie grobkörnigem B₄C mit einer mittleren Partikelgröße von 120µm bei einem Anteil von 40 Gew.-% aufbereitet. Hierzu werden auf 100 Gewichtsanteile Feststoff 18 Gew.-% Wasser sowie 1 Gew.-% organische Hilfsstoffe (Netzmittel, Verflüssigungshilfsmittel, Binder) berücksichtigt. Anschließend wird der Schlicker auf einer Druckgiessmaschine unter Verwendung einer porösen Kunststoffform auf Basis von Polymethylmethacrylat bei einem Schlickerdruck von 40 bar zu einer mehrfach gekrümmten Platte mit den Abmessungen 350 × 275 × 9mm vergossen. Der so geformte Scherben wird daraufhin in einer Umlufttrockenkammer getrocknet und über einen Reaktionsbrand zu einer Keramikplatte auf Basis eines reaktionsgebundenen Kompositwerkstoffes, bestehend im Wesentlichen aus SiC und B₄C sowie freiem Si umgewandelt. Der so erhaltene Verbundformkörper bildet eine Körperschutzplatte, die als monolithischer Einschub einer ballistischen Körperschutzweste verwendet werden kann. Der Verbundformkörper besteht dazu beispielsweise aus einem erhaltenen Werkstoff umfassend grobkörniges B₄C mit einem Anteil von 31 Gew.-%, feinkörnigem Primär-SiC mit einem Anteil von 41 Gew.-%, feinkörnigem Sekundär-SiC mit einem Anteil von 17 Gew.-% sowie freiem, metallischen Silizium mit einem Anteil von 11 Gew.-%.
2. Herstellung einer Fahrzeugschutzplatte aus dem erfindungsgemäßen Verbundformkörper, wozu eine uniaxiale Pressformgebung zum Einsatz kommt. Zunächst wird eine wässrige Suspension gemäß der in Beispiel 1 beschriebenen Zusammensetzung aufbereitet und mittels eines Sprühtrocknungsverfahrens zu einem Pressgranulat weiterverarbeitet. Lediglich die organischen Hilfsmittel müssen hierzu in Ihrer Zusammensetzung angepasst und um ein Presshilfsmittel ergänzt werden. Anschließend wird das Granulat in eine quadratische Hartmetallform eingefüllt und bei einem Druck von 1700 bar verpresst. Der so gewonnene Rohling wird anschließend einem Reaktionsbrand unterzogen, aus dem dann eine keramische Platte auf Basis eines reaktionsgebundenen Kompositwerkstoffes, bestehend im Wesentlichen aus SiC und B₄C sowie freiem Si entsteht, wobei diese eine Kantenlänge von 50mm sowie eine Wandstärke von 9mm aufweist. Der so erhaltene Verbundformkörper bildet eine polygonale Schutzplatte, die für die effiziente Auskleidung großer Flächen beim Fahrzeugschutz eingesetzt werden kann.
3. Herstellung eines Helms aus dem erfindungsgemäßen Verbundformkörper, wozu ein 3D-Druckverfahren zum Einsatz kommt. Der schichtweise Aufbau erfolgt ausgehend von einer formlösen Körnung bestehend aus SiC und B₄C, in einem Mischungsverhältnis von 70 Gew.-% SiC sowie 30 Gew.-% B₄C, wobei das B₄C-Pulver beispielsweise auf einer Korngrößenverteilung basiert, die von einer technischen Feuerfestkeramik unter der Bezeichnung 100/F bekannt ist und somit charakteristische Kennwerte von d10 = 75µm, d50 =115µm, d90 = 160µm aufweist. Das feinkörnigere SiC-Pulver basiert beispielsweise auf einer Korngrößenverteilung, die von einer technischen Schleifmittelkörnung unter der Bezeichnung F180 bekannt ist und somit eine mittlere Partikelgröße d50 = 65µm aufweist. Die selektive Verfestigung der Körner erfolgt an den durch ein zugrunde gelegtes CAD-Modell vorgegebenen Stellen, durch den tropfenweisen Eintrag eines organischen Bindemittels, vorzugsweise Furanharz, die über Inkjet-Druckköpfe appliziert werden. Das hier verwendete CAD-Modell, welches der finalen Bauteilgeometrie entspricht, erlaubt die Erzeugung komplex geformter Strukturen. Im Anschluss an diese beiden Teilschritte erfolgt die Absenkung der Baufeldebene um eine zuvor definierte Schichtdicke, die in diesem Fall 300µm beträgt. Diese Schrittabfolge wird so lange iterativ wiederholt, bis die schichtweise Umsetzung des CAD-Modells abgeschlossen ist. Der auf diese Weise gewonnene, komplex geformte Vorkörper weist eine Porosität von 45 Vol.-% auf und wird anschließend mit einer wässrigen Dispersion, bestehend aus 30 Gew.-% kolloidalem Kohlenstoff sowie einem Dispergierhilfsmittel und einem Netzmittel infiltriert. Nach einem ersten Tränkungsvorgang erhält man auf diese Weise einen komplex geformten, keramischen Vorkörper, bestehend zu 87 Gew.-% aus der ursprünglichen SiC-B₄C-Pulvermischung sowie zu 13 Gew.-% aus kolloidalem Kohlenstoff. Nach einem Trocknungsvorgang sowie einem möglichen zweiten Tränkungsschritt verändert sich dieses Verhältnis zu 79/21 Gew.-%, nach einem möglichen dritten Tränkungsschritt zu 76/24 Gew.-%. Nach einem abschließenden Trocknungsvorgang wird der so gewonnene, komplex geformte Vorkörper über einen Reaktionsbrand zu einem Keramikkörper auf Basis eines reaktionsgebundenen Kompositwerkstoffes, bestehend im Wesentlichen aus SiC und B₄C sowie freiem Si umgewandelt. Der so erhaltene Werkstoff besteht beispielsweise aus grobkörnigem B₄C mit einem Anteil von 15 Gew.-%, feinkörnigem Primär-SiC mit einem Anteil von 45 Gew.-%, feinkörnigem Sekundär-SiC mit einem Anteil von 24 Gew.-% sowie freiem, metallischem Si mit einem Anteil von 15 Gew.-%. Der so erhaltene komplex geformte Vorkörper, kann als Grundelement eines ballistischen Helmes für den Kopfschutz eingesetzt werden, wobei die Herstellung über das hier beschriebene 3D-Druckverfahren die Erzeugung einer ergonomischem, potentiell individualisierten Helmgeomtrie, erlaubt.
4. Herstellung einer Sitzschale aus dem erfindungsgemäßen Verbundformkörper mittels 3D-Druck. Wie im zuvor beschriebenen Beispiel beschrieben, wird mittels eines pulverbettbasierten 3D-Druckverfahrens gearbeitet, wobei das Mischungsverhältnis in diesem Fall 60 Gew.-% SiC sowie 40 Gew.-% B₄C beträgt. Dies führt zu einer Verringerung der resultierenden Dichte des gebrannten Bauteils, weshalb sich die Herstellung derartiger Werkstoffzusammensetzungen insbesondere für den Luftfahrtbereich eignet. Der so erhaltene Werkstoff besteht beispielsweise aus grobkörnigem B₄C mit einem Anteil von 21 Gew.-%, feinkörnigem Primär-SiC mit einem Anteil von 40 Gew.-%, feinkörnigem Sekundär-SiC mit einem Anteil von 24 Gew.-%, sowie freiem, metallischem Silizium mit einem Anteil von 15 Gew.-%. In diesem Ausführungsbeispiel können, bei Verwendung entsprechender CAD-Modelle auf diese Weise gewichtsoptimierte Sitzschalen für die Anwendung in verschiedenen Luftfahrzeugen, wie etwa Helikoptern, gewonnen werden. Die so hergestellte Sitzschale hat eine Größe von ca. 300 × 300mm, eine Wandstärke von 9mm und eine Höhe von 200mm und ist ergonomisch geformt. Die dazugehörige Rückenlehne hat eine Länge von 500mm, eine Breite von 300mm und eine Höhe von 100mm und ist ebenfalls ergonomisch geformt. Derart große Bauteile können rissfrei hergestellt werden. Eine Bearbeitung über subtraktive Prozesse ist nicht mehr notwendig.
5. Herstellung eines Luftfahrschutzpaneels aus dem erfindungsgemäßen Verbundformkörper mittels 3D-Druck. Wie zuvor beschriebenen, wird mittels eines pulverbettbasierten 3D-Druckverfahrens der erfindungsgemäße Verbundformkörper hergestellt, wobei das Mischungsverhältnis in diesem Fall 50 Gew.-% SiC sowie 50 Gew.-% B₄C beträgt. Der so erhaltene Werkstoff besteht beispielsweise aus grobkörnigem B₄C mit einem Anteil von 26 Gew.-%, feinkörnigem Primär-SiC mit einem Anteil von 35 Gew.-%, feinkörnigem Sekundär-SiC mit einem Anteil von 24 Gew.-%, sowie freiem, metallischem Silizium mit einem Anteil von 15 Gew.-%. Dies führt zu einer weiteren Verringerung der resultierenden Dichte des gebrannten Bauteils, weshalb sich die Herstellung derartiger Werkstoffzusammensetzungen insbesondere für den Luftfahrtbereich, hier insbesondere für großvolumige Elemente, wie etwa Luftfahrschutzpaneele eignet. Das so hergestellte Seitenelement hat beispielsweise eine Abmessung von 1200mm × 800mm × 9mm.
6. Herstellung eines ballistischen Schutzes, insbesondere gegenüber einem Munitionssystem mit Wolframcarbid-Kern aus dem erfindungsgemäßen Verbundformkörper mit beispielsweise einem Flächengewicht von 2075g/700cm² = 33,5kg/m² umfassend die mit Silizium infiltrierte Mischkeramik in beispielsweise einem Format 240mm × 305mm × 9,1mm, 1790g, mit beispielsweise einem Backing, das vorzugsweise 27 Lagen aus Polyethylen aufweist, und vorzugsweise 8 Lagen aus Carbonfasern mit beispielsweise einem Flächengewicht von 385g. Die Mischkeramik und das Backing können unter Temperatur und Druck miteinander verpresst sein, und zwar vorzugsweise in einem Autoklaven. Als Ergebnis folgt ein ballistischer Schutz gegen 1 Schuss 5,56 × 45 M995 mit Wolframcarbid-Kern. Schutz bedeutet insoweit keine Penetration durch das Geschoss bei einer Backface-Deformation von 39mm im Test. Für das Backing gilt allgemein, dass dieses ausgebildet sein kann aus Aramidfasergelegen, Polyethylen (PE), Carbonfasergelegen, Glasfasergelegen und/oder einer Mischung daraus. Ferner kann das Backing vorzugsweise ein- oder beidseitig an der Mischkeramik angebracht sein. Allgemein gilt somit, dass bei einem Flächengewicht von vorzugsweise < 32kg/m² 1 Schuss M995 mit Wolframcarbid-Kern vorzugsweise gestoppt werden kann.
7. Herstellung eines ballistischen Schutzes, insbesondere gegenüber einem Munitionssystem mit Wolframcarbid-Kern aus dem erfindungsgemäßen Verbundformkörper mit beispielsweise einem Flächengewicht von 2342g/700cm² = 33,5kg/m² umfassend die mit Silizium infiltrierte Mischkeramik in beispielsweise einem Format 240mm × 305mm × 9,1mm, 1792g, mit beispielsweise einem Backing, das vorzugsweise 39 Lagen aus Polyethylen aufweist, und vorzugsweise 8 Lagen aus Carbonfasern mit beispielsweise einem Flächengewicht von 550g. Die Mischkeramik und das Backing können unter Temperatur und Druck miteinander verpresst sein, und zwar vorzugsweise in einem Autoklaven. Als Ergebnis folgt ein ballistischer Schutz gegen 2 Schuss 5,56 × 45 M995 mit Wolframcarbid-Kern. Schutz bedeutet insoweit keine Penetration durch das Geschoss bei einer Backface-Deformation von 29mm im 1. Schuss und 37 mm im 2. Schuss im Test. Für das Backing gilt allgemein, dass dieses ausgebildet sein kann aus Aramidfasergelegen, Polyethylen (PE), Carbonfasergelegen, Glasfasergelegen und/oder einer Mischung daraus. Ferner kann das Backing vorzugsweise ein- oder beidseitig an der Mischkeramik angebracht sein. Allgemein gilt somit, dass bei einem Flächengewicht von vorzugsweise < 40kg/m² 2 Schüsse M995 mit Wolframcarbid-Kern im Abstand von 100 mm vorzugsweise gestoppt werden können.

## Patentansprüche

1. Verbundformkörper aus einer reaktionsgebundenen, mit Silizium infiltrierten Mischkeramik, deren Gefüge bestimmt ist durch Primärkörner aus kristallinen B₄C-Körnern (1) der mittleren Korngröße d50 > 100µm und < 500µm sowie einem Anteil von > 10 Gew.-% und < 50 Gew.-%, und durch Primärkörner eines feineren Siliziumcarbid mit d50 < 70µm sowie einem Anteil von > 10 Gew.-% und < 50 Gew.-%, und die Primärkörner siliziert (3) verbunden sind durch sekundär gebildetes Siliziumcarbid mit einem Anteil von > 5 Gew.-% und < 25 Gew.-%, in einer Siliziumcarbidmatrix mit einem Gehalt an freiem metallischem Silizium (2) von > 1 Gew.-% und < 20 Gew.-%, und die Formgebung mit einem Hüllvolumen > 200 × 200 × 200mm erfolgt.

2. Verbundformkörper nach Anspruch 1, **dadurch gekennzeichnet, dass** die Primärkörner siliziert verbunden sind durch sekundär gebildetes Siliziumcarbid mit einem Anteil von > 15 Gew.-% und < 25 Gew.-%.

3. Verbundformkörper nach Anspruch 1 oder 2, **dadurch gekennzeichnet, dass** die Primärkörner aus Siliziumcarbid mit d50 < 40µm, insbesondere < 10µm enthalten sind.

4. Verbundformkörper nach einem der Ansprüche 1 bis 3, **dadurch gekennzeichnet, dass** der Dichtegradient < 2 Gew.-% beträgt.

5. Verbundformkörper nach einem der Ansprüche 1 bis 4, **dadurch gekennzeichnet, dass** innerhalb des freien metallischen Siliziums (2) gelöstes Bor mit einem Anteil zwischen > 0,05 und < 5 Gew.-% enthalten ist.

6. Verbundformkörper nach einem der Ansprüche 1 bis 5, **dadurch gekennzeichnet, dass** die Formgebung durch Schlickergießen, Druckgießen, uniaxiales Pressen, isostatisches Pressen, Stampfen oder manuelle Pulververdichten durchführbar ist.

7. Verbundformkörper nach einem der Ansprüche 1 bis 6 **dadurch gekennzeichnet, dass** die Formgebung über ein Pulverbett-3D-Druckverfahren durchführbar ist.

8. Verbundformkörper nach Anspruch 7, **dadurch gekennzeichnet, dass** ein Gemisch aus SiC und B₄C Pulver mittels Binder im Pulverbettdruck zu einem dreidimensionalen Bauteil aufgebaut und anschließend siliziert ist.

9. Verbundformkörper nach einem der Ansprüche 1 bis 8, **dadurch gekennzeichnet, dass** die Formgebung plattenförmig erfolgt.

10. Verwendung des Verbundformkörpers nach einem der Ansprüche 1 bis 9 als ballistischer Schutz, **dadurch gekennzeichnet, dass** ein Backingmaterial aus einer oder mehreren Lagen vorgesehen ist, das mit der Mischkeramik zu einem Flächengewicht < 32kg/m² oder < 40kg/m² für einen wählbaren ballistischen Schutz gegenüber einem Schuss oder mehreren Schüssen eines Munitionssystems verpresst ist.

11. Verwendung des Verbundformkörpers nach Anspruch 10, **dadurch gekennzeichnet, dass** das Backingmaterial zum Schutz gegen wolframcarbid- oder wolframhaltige Munition ausgelegt ist.

12. Verwendung des Verbundformkörpers nach Anspruch 10 oder 11, **dadurch gekennzeichnet, dass** das Backingmaterial aus mindestens einer Lage eines oder mehrerer Kunststoffe, insbesondere Polyethylen oder Aramid, Carbonfasern, Glasfasern, Metallen und/oder einer Kombination dieser Materialien und/oder Verbindungsmaterial, insbesondere Klebefolien hergestellt ist.

13. Verwendung des Verbundformkörpers nach einem der Ansprüche 10 oder 12, **dadurch gekennzeichnet, dass** die Formgebung zur Herstellung von Körperschutzplatten, Sitzschalen, Rückenlehnen sowie Kombinationen daraus und Paneelen im Luftfahrtschutz vorgesehen ist.
